Europäisches Patentamt

European Patent Office

Office européen des brevets

(11) Publication number: **0 448 901 B1**

# EUROPEAN PATENT SPECIFICATION

(45) Date of publication of patent specification: **16.08.95**   (51) Int. Cl.⁶: **B60C 9/06**, B60C 9/12

(21) Application number: **90630238.5**

(22) Date of filing: **18.12.90**

(54) **Bias ply aircraft tire.**

(30) Priority: **22.03.90 US 497389**

(43) Date of publication of application:
**02.10.91 Bulletin 91/40**

(45) Publication of the grant of the patent:
**16.08.95 Bulletin 95/33**

(84) Designated Contracting States:
**FR GB LU**

(56) References cited:
**EP-A- 0 350 944**
**EP-A- 0 356 159**
**GB-A- 2 003 806**
**US-A- 4 850 412**

(73) Proprietor: **THE GOODYEAR TIRE & RUBBER COMPANY**
**1144 East Market Street**
**Akron, Ohio 44316-0001 (US)**

(72) Inventor: **Domchick, Stephen Joseph**
**516 Park Ridge Dr.**
**Munroe Falls, OH 44262 (US)**
Inventor: **Lukich, Lewis Timothy**
**1025 West Market Street**
**Akron,**
**Ohio 44313 (US)**
Inventor: **Shaw, Joanne Elizabeth**
**2023 17th Street**
**Cuyahoga Falls, OH 44223 (US)**

(74) Representative: **Leitz, Paul**
**Goodyear Technical Center-Luxembourg**
**L-7750 Colmar-Berg (LU)**

EP 0 448 901 B1

## Description

### Background of the Invention

The present invention relates to a bias ply pneumatic tire for use on an aircraft.

It is generally recognized in the tire art that tires suitable for use on aircraft must be capable of operating under conditions of very high speeds and large loads as compared to tires used on automobiles, busses, trucks or similar earthbound vehicles. Tires used on earthbound vehicles undergo millions of flexes (rotations) during their lifetime under loads that fall in a relatively small range. Aircraft tires are subjected to high centrifugal forces and large loads on takeoff and high sudden impact stresses (including a high G-force) and loads during landing. An aircraft tire undergoes relatively few flexes (compared to earthbound tires) during its lifetime. As used herein and in the claims, a tire is "suitable for use on an aircraft" if the tire is of a size and load range, or ply rating, specified in either the "Yearbook of the Tire and Rim Association", or the "Yearbook or the European Tyre and Rim Technical Organization," or in the current U.S.A. military specification "MIL-T-5041".

In the prior art, in order to meet the required ratings, aircraft tires were made using a large number of carcass plies and breaker plies having a high EPI (ends per inch or EPM = ends per meter; one EPI equals 39,4 EPM) count of multifilament cords as reinforcement. Multifilament reinforcing cords were used, apparently, because when synthetic materials replaced cotton as a filament support, it was desired to duplicate in appearance the natural fibers then in use, and it was apparently believed that monofilament cords having the diameter of multifilament cords would be too stiff and therefore more subject to fatigue breakage than the multifilament cords.

The use of large diameter, flattened monofilament cords in making aircraft tires theoretically makes it possible to provide a tire which meets aircraft specifications which uses about 17 % less fabric and about 46 % less rubber compound.

Monofilaments of similar structure have been used in radial ply tires as described in US-A-4 850 412 (& EP-A-312 038) assigned to E.I. Du Pont de Nemours and Company. EP-A- 350 944 also assigned to E.I. Du Pont de Nemours and Company, discloses a monofilament having an adhesive coating on its surface of from 0.5 to 5% by weight and which is embedded in rubber by creel calendering, to produce a rubber article free of pick yarns or filaments.

It has been found that the high stiffness of bias ply composites made using monofilament cords make the use of such monofilaments particularly suitable for use in bias ply aircraft tires, apparently because aircraft tires are subject to high loads and relatively few flexes.

It has been discovered that tires of the invention have a surprisingly high burst strength.

Pneumatic tires having a bias laid carcass construction and breaker plies superimposed about the carcass body, the breaker and carcass plies being reinforced by nylon cords, are for instance known from GB-A- 2 003 806, which corresponds to the preamble of claim 1.

### Summary of the Invention

The present invention discloses a bias ply pneumatic tire for use on an aircraft such as stated in the appended claim 1. Preferred embodiments of the invention are defined in the dependent claims.

### Brief Description of the Drawings

Fig. 1 is a cross-sectional view of a tire according to one embodiment of the invention taken in a plane that contains the axis of rotation of the tire.

Fig. 2 is an enlarged illustration of the bead area of the tire.

Fig. 2a illustrates a portion of a reinforcing ply using flat reinforcing monofilaments.

Fig. 3 is an enlarged cross-sectional view of an obround monofilament cord suitable for use in the present invention.

Fig. 4 is an enlarged cross-sectional view of an alternative monofilament cord with rounded edges.

Fig. 5 is an enlarged cross sectional view of a crimped or flattened monofilament cord.

### Definitions

As used herein and in the claims, the terms

"obround" refers to a cross sectional shape having a width greater than its height and having no sharp

2

corners (e.g. oval), and generically is intended to include similar rounded shapes,

"axial" and "axially" refer to directions which are parallel to the axis of rotation of a tire,

"radial" and "radially" refer to directions that are perpendicular to the axis of rotation of a tire,

"bead" refers to that part of a tire comprising an annular tensile member wrapped by ply cords and shaped, with or without other reinforcement elements to fit a designed tire rim,

"carcass" refers to the tire structure apart from the belt structure, tread, undertread, and sidewall rubber but including the beads, (carcass plies are wrapped around the beads),

"equatorial plane" refers to a plane that is perpendicular to the axis of rotation of a tire and passes through the center of the tire's tread,

"breaker plies" refers to annular reinforcement members in the crown area of the tire having longitudinal reinforcement members having an angle (in the illustrated embodiment) with respect to the equatorial plane of the tire of about 5° less than the angle of such reinforcement members in the (bias) carcass plies.

"crown" refers to substantially the outer circumference of a tire where the tread is disposed,

"rivet" refers to the amount of space between two adjacent cords,

"tenacity" refers to stress expressed as force per unit linear density of an unstrained specimen (g/tex or g/denier), (usually used in textiles), and

"modulus" refers to the ratio of the change in stress to the change in strain.

## Detailed Description of the Invention

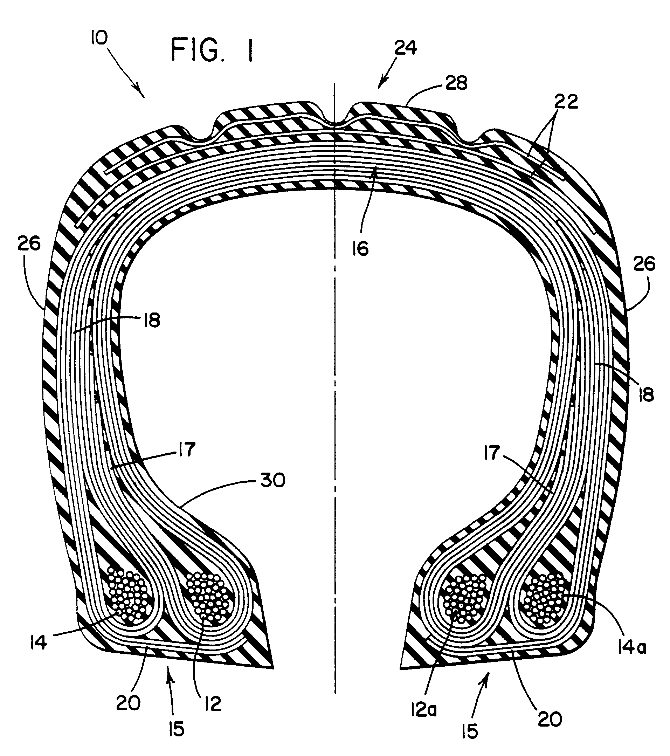

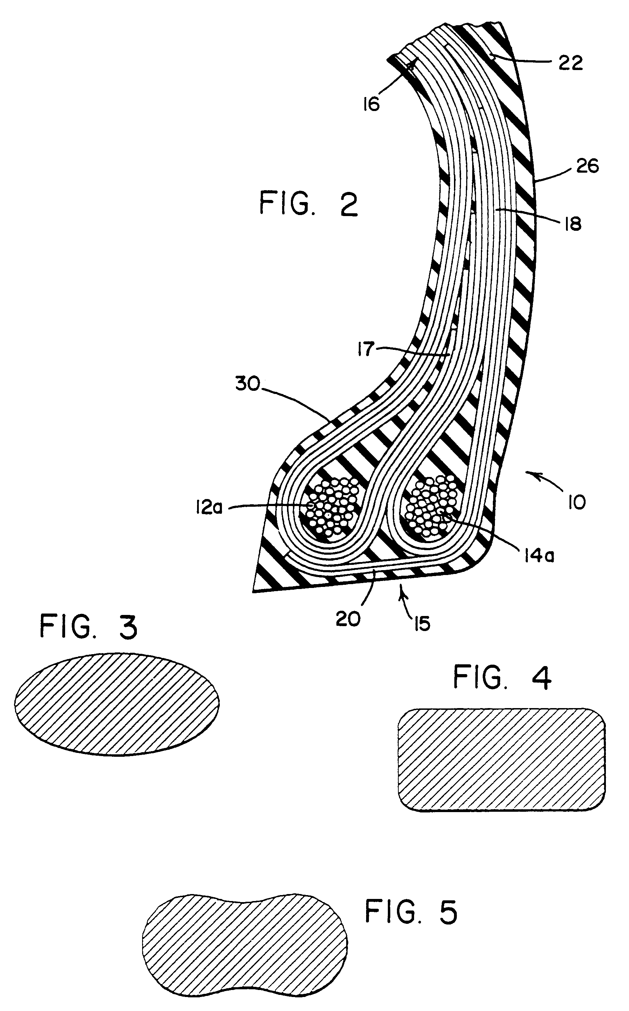

With reference now to Figs. 1 and 2, a preferred embodiment of a pneumatic aircraft tire 10 is illustrated which comprises, generally, a bead portion 15, carcass plies 16, side walls 26, innerliner 30, breakers 22, and tread 28 (in the crown portion 24 of the tire). Bead portion 15, in the specific embodiment illustrated, comprises a first pair of beads 12, 12a and a second pair of beads 14, 14a disposed axially outwardly of beads 12 and 12a respectively. Turn-up carcass plies 17 are wrapped around first pair of beads 12, 12a, and then pass between beads 12 and 14 (and between beads 12a and 14a). Similarly, turn-up carcass plies 18 are wrapped around second pair of beads 14, 14a, first passing between beads 12 and 14 (and between beads 12a and 14a). Finally, turn-down carcass plies 20 are placed over turn-up carcass plies 18 and are wrapped over both pairs of beads 12, 12a and 14, 14a in the bead portion 15 of the tire.

Those skilled in the art will recognize that a similar tire construction can be used in tires employing three or four tire beads.

To provide further radial support to the tire 10, breaker plies 22 are placed over carcass plies 20 in the crown area 24 of the tire. In the building of the tire, sidewalls 26 are then placed over carcass plies 20 in the side portion of the tire, and tread rubber 28 is placed over breaker plies 22 in the crown portion 24 of the tire.

The carcass plies and breaker plies, as is common in the art, are reinforced with substantially parallel longitudinal reinforcing members. The present invention relates specifically to bias ply pneumatic tires which have bias carcass plies and/or breaker plies which are reinforced by nylon monofilaments. The nylon monofilaments used in the carcass and/or breaker plies have an obround (oblong) cross section (flat) and are at least 2200 dtex (2000 denier) and have a tenacity of at least 53 cN/tex (6 g/denier), an initial modulus of at least 265 cN/tex (30 g/denier), preferably at least 353 cN/tex (40 g/denier), an elongation at break of at least 17% and a shrinkage of at most 5%. The use of such monofilament reinforcing members makes it possible to produce a tire using less rubber which theoretically reduces the weight of the tire.

In general, it has been found that 2200 dtex (2000 denier) monofilaments can be used in passenger tires, 4400 dtex (4000 denier) monofilaments can be used in aircraft tires, and 6600 dtex (6000 denier) monofilaments can be used in bias truck tires and earthmovers.

Monofilaments of nylon, particularly well suited for implementing the invention are those sold by E.I. Dupont de Nemours & Co. of Wilmington, Delaware, under the Trademark "HYTEN".

In an illustrated embodiment, it has been determined that tires having good burst properties and durability can be constructed using carcass plies which comprise nylon monofilament reinforcement in a concentration of about 315-945 EPM (8-24 EPI). Breaker or belt plies using monofilament reinforcement in a concentration of about 236-630 EPM (6-16 EPI), preferably 390-472 EPM (10-12 EPI), may also contribute to the burst strength, durability and lateral stability of a tire. It is believed that tires made according to the invention also demonstrate excellent dimensional stability and low heat generation.

It is believed that many of the above properties, especially lateral stability, dimensional stability and low heat generation, are directly attributable to the stiffness of composites made using monofilament reinforcing cords. In sample composites made using 4.400 dtex (4000 denier) nylon monofilaments, it was found that stiffness increased about 30% over the stiffness observed in comparable sample composites made using 1400/2 and 940/2 dtex (1260/2 and 840/2 denier) multifilament nylon cords. Whereas sample multifilament composites demonstrated a stiffness of about 20 N/mm, it is believed that aircraft tires made using monofilaments that demonstrate a stiffness of 22-38 N/mm (preferably 24-30 N/mm) in similar samples (10-90% to 20-50% greater than the stiffness of similar samples made with multifilament reinforcing cords) demonstrate a significant improvement over aircraft tires made using the multifilament reinforcing cord.

With reference now to Fig. 2a, the carcass plies 32 used in the tire of the invention are bias plies in which a number of parallel monofilament cords 11 are used to provide longitudinal strength to the plies. Pile cords 13 may be used to hold cords 11 together during handling but their retention in a tire construction is considered to be optional. The pile cords may be broken in the preparation of the carcass plies as is conventional in the art.

In the bias ply tire 10 of the invention, the carcass bias ply is wrapped over beads 12, 12a and 14, 14a such that monofilament cords 11 have an angle of between about 28° and 40°, preferably 34° with respect to the equatorial plane of the tire. By definition, the reinforcement members in breaker plies have an angle at least 5° less than the angle of the reinforcement members in the carcass plies, and accordingly, the reinforcement members in the breaker plies have an angle of between about 23° and 35°, preferably 29°, with respect to the equatorial plane of the tire.

In each bead portion 15 of the tire, each of the turn-up carcass plies is folded axially and radially outwardly about one of the bead cores, and the turn-down carcass plies 20 are folded radially and axially inwardly at least partially about each of the bead cores and the turn-up carcass plies 17 and 18. The turn-down carcass plies 20 are folded around the bead cores to such a degree that the respective edges of said turn-down plies are located axially inwardly of the axial midpoints of the axially innermost bead core 12, 12a in the respective bead portion.

In the preferred embodiment of the invention, both the bias plies and the breaker plies will be reinforced with monofilament cords as described herein. Those skilled in the art will recognize, however, that tires may be made according to the invention wherein bias carcass plies are reinforced with monofilament cords (to allow production of a tire with reduced weight) while the breaker plies are reinforced with steel, or other types of reinforcement (to provide increased strength or other desirable properties). Similarly, tires can be made according to the invention using conventional material in the bias carcass ply, and monofilament cords in the breaker plies.

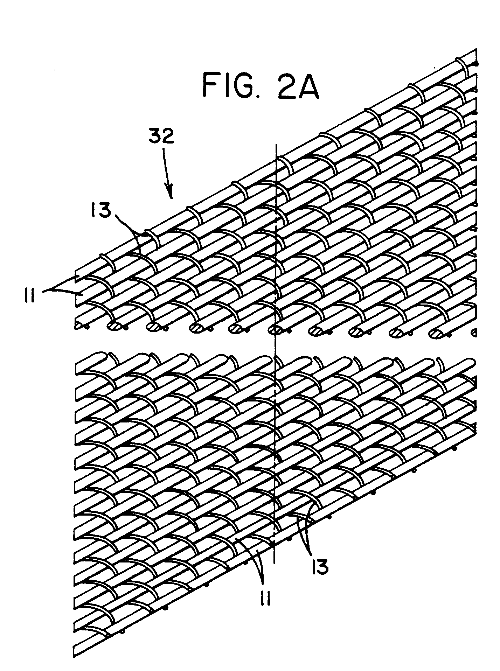

With reference now to Figs. 3, 4 and 5, cross sections of nylon monofilaments particularly suited for practicing the invention are illustrated. Slightly flattened filaments with a substantially oval section (See Fig. 3), strongly flattened filaments with rounded off edges (see Fig. 4) or having a central constriction (See Fig. 5), offer gauge advantages and have a lower rivet area for a given density of cords EPM (EPI) than filaments with conventional circular cross-section. Preferably, the nylon monofilaments should have their greatest linear cross-sectional extent, i.e., their width, two to five times the linear cross-sectional extent perpendicular to said width, i.e., their thickness. Consequently, they allow the manufacture of more compact tires, which in addition have a better lateral stability. In order to improve the adhesion of rubber to the filaments, profiled filaments can be of advantage; filament cross-sections having sharp edges or corners, however, appear to cause crack generation in the neighboring rubber. It may also be of advantage in practicing the invention to coat the filaments with a suitable adhesive, for example a conventional RFL adhesive, to promote adherence of rubber to the monofilaments.

The reinforcing elements of all of the carcass plies can be substantially the same and each comprise a monofilament of at least 2200 dtex (2000 denier), preferably between about 4400 and 6600 dtex (4,000 and 6,000 denier) nylon. A monofilament is by definition a cord consisting of one filament. When using monofilaments of 4400 dtex (4000 denier) and up, the monofilaments in each ply are disposed with a density of 315 to 630 EPM (8 to 16 EPI), preferably 390 to 551 EPM (10 to 14 EPI) in order to yield the desired mechanical characteristics of the tire carcass.

Those skilled in the art will recognize that materials having greater strength and elongation properties could improve the performance of any aircraft tire made therewith. It is believed that the above data represents the minimum requirements for a monofilament reinforcement material needed to make bias ply tires in accordance with the present invention. The maximum tenacity for this type of material is estimated to be about 88 cN/tex (10 g/denier), the maximum initial modulus is estimated to be about 620 cN/tex (70 g/denier), and the maximum elongation at break is estimated to be about 24%.

Tires have been manufactured according to a preferred embodiment using flat 4400 dtex (4,000 denier) nylon monofilaments having the following approximate characteristics:

section height: 0.4 mm

section width: 1.2 mm

tenacity: 79 cN/tex (9 g/denier)

initial modulus: 440 cN/tex (50 g/denier)

elongation at break: 19%

shrinkage: 3.7%

The different strength measurements were made using a standard tensile tester, and the shrinkage measurement was made using a Testrite shrinkage tester.

Tires made using bias carcass plies having nylon 6:6 monofilament reinforcing members demonstrate increased tire endurance and durability. Also, the stiffness of the flat nylon cords stabilizes the tire construction reducing traction waves, inner ply shear strains and heat generation.

The invention is further illustrated with reference to the following examples.

Example 1

This example compares the bending stiffness of a 4400 dtex (4000d) HYTEN/NR composite to 940/2 dtex (840/2 denier) and 1400/2 dtex (1260/2 denier) nylon/NR composites.

Laboratory composites were constructed for bending stiffness comparisons in a manner simulating bias plies for aircraft tires (18x5.7-8) using 4400 dtex (4000d) HYTEN®, 940/2 dtex (840/2 denier) multifilament nylon cords and 1400/2 dtex (1260/2 denier) multifilament nylon cords and a natural rubber (NR) carcass compound. The construction of the test composites is described below. The same rubber formulation was used in each sample. The carcass compound used for testing comprises natural rubber, 45 phr carbon black, 2 phr sulfur, oil extenders, zinc oxide fillers and accelerators commonly used by those skilled in the art. (This is the rubber formulation used in commercial aircraft tires, e.g. Boeing 747 tires.) Expected cured EPI and cured angle for the reinforcement cords were used in all simulated plies constructed.

| SAMPLE PLY CONSTRUCTION | | | | | |
|---|---|---|---|---|---|
| HYTEN COMPOSITE | | | MULTIFILAMENT COMPOSITE | | |
| Cured Angle | EPM (EPI) | Rivet | Cured Angle | EPM (EPI) | Rivet |
| 1. 36 | 551 (14) | 0.006 | 32 | 1417 (36) | 0.006 |
| 2. 35 | 551 (14) | 0.006 | 34 | 1496 (38) | 0.004 |
| 3. 35 | 551 (14) | 0.006 | 33 | 1417 (36) | 0.006 |
| 4. 37 | 551 (14) | 0.006 | 34 | 1417 (36) | 0.006 |
| 5. 33 | 551 (14) | 0.006 | 33 | 1417 (36) | 0.006 |
| 6. 33 | 551 (14) | 0.006 | 33 | 1417 (36) | 0.006 |
| 7. 32 | 390 (10) | 0.008 | 31 | 1102 (28) | 0.014 |
| 8. 31 | 390 (10) | 0.008 | 31 | 1102 (28) | 0.014 |
| 9. 27 | 472 (12) | 0.007 | 24 | 780 (20) | 0.024 |
| 10. 25 | 472 (12) | 0.007 | 24 | 780 (20) | 0.024 |

The cured gauge of each sample composite was 0,86 cm (0.34 inch)

4.400 dtex (4000d) HYTEN/NR, 940/2 dtex (840/2 denier) nylon/NR and 1.400/2 dtex (1260/2 denier) nylon/NR bands were made with the optimal EPM (EPI) for each composite; the bands were cut at the correct angle (parallel to the reinforcing cords) and plied together to simulate the crown section of the tire. Two test specimens (size - 1x4 in) were cut for testing. The specimen was mounted on the three point bending jig, cycled 3 times between 0 and 5 mm deflection and the stiffness measured from the 4th cycle.

The stiffness values for composites employing HYTEN and multifilament nylon reinforcement cord were 26 and 20, N/mm respectively. The HYTEN composite is about 30% more stiff than the multifilament cord composite.

Example 2

The following tables illustrate an aircraft tire construction made using conventional 940/2 dtex (840/2 denier) multifilament nylon reinforcing cords in the carcass and 1400/2 dtex (1260/2 denier) multifilament nylon reinforcing cords in the breaker plies (Table I), and an otherwise identical aircraft tire construction using HYTEN in the carcass plies and conventional multifilament nylon reinforcing cords in the breakers (Table II), and an otherwise substantially identical aircraft tire construction using nylon monofilament (HYTEN) reinforcement cords in the carcass plies and the breakers (Table III).

5

The data illustrates an improved burst strength when HYTEN reinforced carcass plies are used in a tire over a tire made using multifilament reinforcement cords, and illustrates additional burst strength improvement when both the carcass plies and the breaker plies are reinforced with HYTEN cords. The gauge of the carcass plies in each case was 0,071 cm (0.028 in.), and the gauge of the breaker plies was 0,091 cm (0.036 in.) in Tables I and II and 0,076 cm (0.030 in.) in Table III.

TABLE I

| | MULTI FIL CONST #866 | | WEIGHT 7,1 kg (15.7 lbs) | | BURST = 9 MPa (1310 lbs) | |
|---|---|---|---|---|---|---|
| PLY | MTL | GREEN EPM(EPI) | GREEN ANG | CURED EPM(EPI) | CURED ANG | |
| 1 | 940/2 d tex (840/2 denier) | 1380 (35) | 52.0 | 1417 (36) | 32.0 | |
| 2 | 940/2 d tex (840/2 denier) | 1380 (35) | 52.0 | 1496 (38) | 33.5 | |
| 3 | 940/2 d tex (840/2 denier) | 1380 (35) | 52.0 | 1417 (36) | 33.0 | |
| 4 | 940/2 d tex (840/2 denier) | 1380 (35) | 52.0 | 1437 (36.5) | 34.0 | |
| 5 | 940/2 d tex (840/2 denier) | 1380 (35) | 51.0 | 1437 (36.5) | 33.0 | |
| 6 | 940/2 d tex (840/2 denier) | 1380 (35) | 51.0 | 1437 (36.5) | 33.0 | |
| 7 | 940/2 d tex (840/2 denier) | 1380 (35) | 50.0 | 1063 (27) | 30.5 | |
| 8 | 940/2 d tex (840/2 denier) | 1380 (35) | 50.0 | 1102 (28) | 31.0 | |
| BRK 1 | 1400/2 d tex (1260/2 denier) | 708 (18) | 39.0 | 768 (19.5) | 23.5 | |
| BRK 2 | 1400/2 d tex (1260/2 denier) | 708 (18) | 39.0 | 780 (20) | 25.0 | |

TABLE II

| | HYTEN | CONST #346 | WEIGHT 7,6 kg (16.8 lbs) | | BURST = 11 M·Pa (1600 lbs) | |
|---|---|---|---|---|---|---|
| PLY | MTL | GREEN EPM(EPI) | GREEN ANG | CURED EPM(EPI) | CURED ANG | |
| 1 | 4.400 d tex (4000D) | 669 (17) | 51.5 | 709 (18) | 37.0 | |
| 2 | 4.400 d tex (4000D) | 669 (17) | 51.5 | 709 (18) | 35.0 | |
| 3 | 4.400 d tex (4000D) | 669 (17) | 51.5 | 709 (18) | 35.0 | |
| 4 | 4.400 d tex (4000D) | 669 (17) | 51.5 | 709 (18) | 36.0 | |
| 5 | 4.400 d tex (4000D) | 669 (17) | 51.0 | 709 (18) | 35.0 | |
| 6 | 4.400 d tex (4000D) | 669 (17) | 51.0 | 709 (18) | 32.0 | |
| 7 | 4.400 d tex (4000D) | 551 (14) | 50.5 | 591 (15) | 35.0 | |
| 8 | 4.400 d tex (4000D) | 551 (14) | 50.5 | 630 (16) | 31.0 | |
| BRK 1 | 1400/2 d tex (1260/2) | 709 (18) | 39.0 | 709 (18) | 28.0 | |
| BRK 2 | 1400/2 d tex (1260/2) | 709 (18) | 39.0 | 780 (20) | 26.0 | |

EP 0 448 901 B1

TABLE III

| PLY | HYTEN MTL | CONST #345 GREEN EPM(EPI) | WEIGHT 7,7 kg (16.9 lbs) GREEN ANG | BURST = 11.5 M·Pa (1660 lbs) CURED EPM(EPI) | CURED ANG |
|---|---|---|---|---|---|
| 1 | 4.400 d tex (4000D) | 669 (17) | 51.5 | 748 (19) | 38.0 |
| 2 | 4.400 d tex (4000D) | 669 (17) | 51.5 | 709 (18) | 34.0 |
| 3 | 4.400 d tex (4000D) | 669 (17) | 51.5 | 748 (19) | 37.0 |
| 4 | 4.400 d tex (4000D) | 669 (17) | 51.5 | 748 (19) | 33.0 |
| 5 | 4.400 d tex (4000D) | 669 (17) | 51.0 | 709 (18) | 37.0 |
| 6 | 4.400 d tex (4000D) | 669 (17) | 51.0 | 748 (19) | 34.0 |
| 7 | 4.400 d tex (4000D) | 551 (14) | 50.5 | 669 (17) | 35.0 |
|  | 4.4000 d tex (4000D) | 551 (14) | 50.5 | 630 (16) | 32.0 |
| BRK 1 | 4.400 d tex (4000D) | 472 (12) | 39.0 | 512 (13) | 28.0 |
| BRK 2 | 4.400 d tex (4000D) | 472 (12) | 38.0 | 591 (15) | 26.0 |

In the burst test, a tire is first filled with water to its rated pressure, held at that point for a time sufficient to determine that the tire will survive; is then hydrostatically inflated to its expected burst pressure, and held at that point for a time sufficient to determine if it will survive; and is then inflated until it explodes, and the water pressure at destruction is measured.

It was found that tires made using 669 EPM (17 EPI) HYTEN in the carcass plies were destroyed on the dynamometer (apparently because there was not enough rubber between the monofilaments), but the test illustrates the viability of improving burst strength using HYTEN reinforcement cords in a bias ply tire.

Example 3

Tires according to the invention have been manufactured in which the 4.400 dtex (4000 denier) nylon monofilaments were used in the carcass plies and breakers as described below. The gauge of the carcass plies was 0,071 cm (0.028 in.), and the gauge of the breaker plies was 0,076 cm (0.030 in.)

7

EP 0 448 901 B1

## TABLE IV

HYTEN Const #344

Tire Weight = 7,3 Kg (16.0 lbs.) Burst = 9,92 M·Pa (1440 lbs.)

| PLY | GREEN EPM(EPI) | GREEN ANG | CURED EPM(EPI) | CURED NO. ANG |
|-----|------|------|------|------|
| 1 | 551 (14) | 51.5 | 551 (14) | 36.0 |
| 2 | " | " | 591 (15) | 35.0 |
| 3 | " | " | 512 (13) | 34.5 |
| 4 | " | " | 551 (14) | 37.0 |
| 5 | " | 51.0 | 591 (15) | 32.5 |
| 6 | " | " | 551 (14) | 33.0 |
| 7 | 354 (9) | 50.5 | 354 (9) | 32.0 |
| 8 | " | " | 394 (10) | 31.0 |
| Brk 1 | 472 (12) | 39.0 | 472 (12) | 26.5 |
| Brk 2 | " | 38.0 | 572 (13) | 25.0 |

The data demonstrates that a tire made using 551 EPM (14 EPI) HYTEN monofilament carcass plies, and 472 EPM (12 EPI) breaker plies has a weight comparable to a tire made using 1378 EPM (35 EPI) multifilament reinforcement in the carcass and 708 EPM (18 EPI) multifilament reinforcement in the breakers (see Example 2) yet has a burst strength which is improved by about 10%.

Example 4

This Example illustrates the result of dynamometer testing comparing a tire construction (687-8) comprising 8 carcass plies and 4 breaker plies reinforced with 1400 dtex (1260/2 denier) multifilament nylon with a tire construction (697-3) comprising eight carcass plies and four breaker plies reinforced with nylon monofilaments (HYTEN) and two additional breaker plies reinforced with 940/2 dtex (840/2 denier) nylon multifilaments.

8

```
TIRE SIZE:      25.5x8 0-14     PLY RATING:    20
RATED LOAD: 7350,3 kg(16200 LBS) RATED INFLATION: 2,14 MPa(310 PSI)

TEST              HYTEN CONST#697-3     MULTI FIL CONST #687-8
TIRE WEIGHT       15,88 kg(35.0 LBS)    15,9 kg(35.1 LBS.)
BURST             6,3 MPa(920 LBS)      7,1 MPa(1030 LBS)
DYNAMIC           TIRE-3:  FAILED       TIRE 8:  FAILED
(T2267)           IN THE 10TH TAXI      IN THE 4TH TAXI
                  TAKEOFF CYCLE         TAKEOFF CYCLE
                  FROM A BLOW OUT       FROM TREAD
                                        SEPARATION
                  TIRE-5 WITH A         TIRE-5 WITH A
                  BUFFED SHOULDER       BUFFED SHOULDER
                  FAILED IN THE         FAILED IN THE
                  42ND TAXI TAKEOFF     8TH TAXI TAKEOFF
                  CYCLE FROM A          CYCLE FROM A TREAD
                  TREAD SEPARATION      SEPARATION
```

The data illustrates that a tire can be made using monofilaments that has less weight than a similar tire made using multifilaments even though two additional breaker plies are used.

Example 5

This Example illustrates the result of dynamometer testing comparing the multifilament reinforced tire construction of Example 2 with the monofilament reinforced tire construction of Example 3.

```
TIRE SIZE:        18x5.7-8
PLY RATING:       20
RATED LOAD        4242,3 kg (9350 LBS)
RATED INFLATION   2,255 MPa (327 PSI)
```

EP 0 448 901 B1

| TEST | HYTEN CONST#344 | MULTIFIL CONST#866 |
|---|---|---|
| TIRE WEIGHT | 7,26 kg (16.0 LBS) | 7,12 kg (15.7 LBS) |
| BURST | 9,92 MPa (1440 LBS) | 9 MPa (1310 LBS) |
| DYNAMIC (T2380) (IAI SPEC# 552/822155, LAVI NOSE) | TIRE COMPLETED 4 INBOARD TAXI 4 OUTBOARD TAXI 4 TAXI TAKEOFF (HIGH SPEED) 4 TAXI TAKEOFF (MAX LOAD 4 LANDING TAXI 4 LANDING TAXI (MAX LOAD) | TIRE COMPLETED 4 INBOARD TAXI 4 OUTBOARD TAXI 4 TAXI TAKEOFF (HIGH SPEED) 4 TAXI TAKEOFF (MAX LOAD) 4 LANDING TAXI 4 LANDING TAXI (MAX LOAD) |
| | THEN TIRE FAILED IN THE REJECTED TAKEOFF CYCLE WITH A BLOWOUT | THEN TIRE FAILED IN THE REJECTED TAKEOFF CYCLE WITH A BLOWOUT |

The rejected takeoff cycle represents the most rigorous conditions possible on the dynamometer (full speed then full brakes). In preliminary development it is expected that all tires will fail under such conditions. The tests illustrate that the HYTEN construction has dynamic properties at least equal to the multifilament construction.

While specific embodiments of the invention have been illustrated and described, those skilled in the art will recognize that the invention may be variously modified and practiced within the scope of the following claims.

## Claims

1. A bias ply pneumatic aircraft tire (10) comprising:
   (a) at least a pair of axially spaced substantially inextensible beads (12,12a; 14,14a),
   (b) biased carcass plies (16) wrapped over said beads (12,12a; 14,14a),,
   (c) breaker plies (22) disposed radially outward of the carcass plies in a crown portion (24) of said tire,
   wherein said carcass plies (16) and said breaker plies (22) comprise substantially parallel cords, characterized
   - in that the cords reinforcing the carcass plies are nylon monofilaments (11) having a tenacity of at least 53 cN/tex (6 g/denier), an initial modulus of at least 309 cN/tex (35 g/denier), and a shrinkage of not greater than 5 %;
   - in that the monofilaments have an obround cross section with their greatest linear extent being two to five times their cross-sectional extent perpendicular thereto; and
   - in that the monofilaments have a linear density of at least 4400 dtex (4000 denier) and a lateral density of 315-630 EPM (8-16 EPI).

10

**2.** The bias ply tire (10) according to claim 1 wherein the nylon monofilaments of the carcass plies (16) are oriented at 28° to 40° with respect to an equatorial plane of the tire.

**3.** The bias ply tire (10) according to claim 1 wherein the breaker plies (22) are reinforced by nylon monofilaments having a tenacity of at least 53 cN/tex (6 g/denier), an initial modulus of at least 265 cN/tex (30 g/denier), and a shrinkage of not greater than 5 %, the monofilaments having an oblong cross section with their greatest linear extent being two to five times their cross-sectional extent perpendicular thereto.

**4.** The bias ply tire (10) according to claim 3 wherein the nylon monofilaments of the breaker plies (22) are oriented at 23° to 35° with respect to an equatorial plane of the tire and have a lateral density of 236-630 EPM (6-16 EPI).

**5.** The bias ply tire (10) according to claims 1 or 3 wherein said nylon monofilaments are about 4400 dtex (4000 denier) and have a tenacity of about 80 cN/tex (9 g/denier), an initial modulus of about 440 cN/tex (50 g/denier), an elongation at break of at least 18 % and a shrinkage of not greater than 4 %.

**6.** The bias ply tire (10) according to claim 1 comprising:
(a) a first pair of axially spaced apart substantially inextensible beads (12,12a) disposed in a pair of bead portions (15);
(b) at least one pair of turn-up carcass plies (17) extending between the beads of said first pair of beads (12,12a), each of said turn-up carcass plies folded axially and radially outwardly about each bead of said first pair of beads;
(c) a second pair of axially spaced apart substantially inextensible beads (14,14a), a bead of said second pair being disposed axially outwardly of each bead of said first pair of beads (12,12a) and the turn-up carcass plies (17) folded thereabout;
(d) at least one pair of turn-up carcass plies (18) extending between the beads of the second set of beads (14,14a), said turn-up carcass plies being folded axially and radially outwardly about each bead of said second pair of beads;
(e) a pair of turn-down carcass plies (20) extending between said bead portions, said turn-down carcass plies being folded radially and axially inwardly at least partially about all of said turn-up carcass plies and beads.

**7.** The bias ply tire (10) according to claim 6 wherein said nylon monofilaments are about 4400 dtex (4000 denier) and have a tenacity of about 70 cN/tex (8 g/denier), an initial modulus of about 440 cN/tex (50 g/denier), an elongation at break of at least 18 % and a shrinkage of not greater than 4 %, and wherein the nylon monofilaments of said turn-up (17,18) and turn-down (20) carcass plies are oriented at 28° to 40° with respect to an equatorial plane of the tire and wherein the nylon monofilaments of said breaker plies are oriented at 23° to 35° with respect to an equatorial plane of the tire.

**8.** The bias ply tire (10) according to claim 1 or 3 wherein the monofilament is slightly flattened and has a substantially oval section.

**9.** The bias ply tire (10) according to claim 1 or 3 wherein the monofilament has a central constriction.

**10.** The bias ply tire (10) according to claim 1 or 3 wherein the monofilament is strongly flattened with rounded off edges.

**Patentansprüche**

**1.** Flugzeugdiagonalluftreifen (10), umfassend:
a) zumindest ein Paar von axial beabstandeten im wesentlichen undehnbaren Wulsten (12, 12a; 14, 14a),
b) diagonale bzw. vorgespannte Karkassenlagen (16), welche über die Wulste (12, 12a; 14, 14a) gewickelt sind,
c) Brecherlagen (22) angeordnet radial außerhalb der Karkassenlagen in einem Kronenabschnitt (24) des Reifens, worin die Karkassenlagen (16) und die Brecherlagen (22) im wesentlichen parallele Fasern umfassen, dadurch gekennzeichnet,

EP 0 448 901 B1

- daß die Fasern, welche die Karkassenlagen verstärken, Nylonmonofilamente (11) sind mit einer Zähigkeit von zumindest 53 cN/tex (6 g/denier), einem Initialmodul von zumindest 309 cN/tex (35 g/denier), und einer Schrumpfung, welche nicht größer als 5% ist;
- daß die Monofilamente einen rundlichen Querschnitt aufweisen, wobei ihre größte lineare Ausdehnung 2 bis 5mal ihrer Querschnittsausdehnung senkrecht dazu ist; und
- daß die Monofilamente eine lineare Dichte von zumindest 4400 dtex (4000 denier) und eine laterale Dichte von 315 bis 630 EPM (8 bis 16 EPI) aufweisen.

2. Diagonalreifen (10) gemäß Anspruch 1, worin die Nylonmonofilamente der Karkassenlagen (16) bei 28° bis 40° bezüglich einer Äquatorialebene des Reifens ausgerichtet sind.

3. Diagonalreifen (10) gemäß Anspruch 1, worin die Brecherlagen (22) durch Nylonmonofilamente verstärkt sind, welche eine Zähigkeit von zumindest 54 cN/tex (6 g/denier), ein anfängliches Modul von zumindest 265 cN/tex (30 g/denier) und eine Schrumpfung aufweisen, welche nicht größer als 5% ist, wobei die Monofilamente einen länglichen Querschnitt aufweisen, wobei ihre größte lineare Ausdehnung 2 bis 5mal ihrer Querschnittsausdehnung senkrecht dazu entspricht.

4. Diagonalreifen (10) gemäß Anspruch 3, worin die Nylonmonofilamente der Brecherlagen (22) bei 230 bis 350 bezüglich einer Äquatorialebene des Reifens ausgerichtet sind und eine laterale Dichte von 236 bis 630 EPM (6 bis 16 EPI) aufweisen.

5. Diagonalreifen (10) gemäß Ansprüchen 1 oder 3, worin die Nylonmonofilamente von etwa 4400 dtex (4000 denier) sind und eine Zähigkeit von etwa 80 cN/tex (9 g/denier), ein Initialmodul von etwa 440 cN/tex (50 g/denier) eine Bruchdehnung von zumindest 18% und eine Schrumpfung aufweisen, welche nicht größer als 4% ist.

6. Diagonalreifen (10) gemäß Anspruch 1, umfassend:
   a) ein erstes Paar von axial beabstandeter im wesentlichen undehnbaren Wulsten (12, 12a), welche in einem Paar von Wulstabschnitten (15) angeordnet sind;
   b) zumindest ein Paar von Hochschlagkarkassenlagen (17), welche sich zwischen den Wulsten des ersten Paares von Wulsten (12, 12a) erstrecken, wobei jede der Hochschlagkarkassenlagen axial und radial außerhalb um jede Wulst des ersten Paares von Wulsten gefaltet sind;
   c) ein zweites Paar von axial beabstandeten im wesentlichen undehnbaren Wulsten (14, 14a), wobei eine Wulst des zweiten Paares axial außerhalb von jeder Wulst des ersten Paares von Wulsten (12, 12a) angeordnet ist und wobei die Hochschlagkarkassenlagen (17) darum gefaltet sind;
   d) zumindest ein Paar von Hochschlagkarkassenlagen (18), welche sich zwischen den Wulsten des zweiten Satzes von Wulsten (14, 14a) erstrecken, wobei die Hochschlagkarkassenlagen axial und radial außerhalb um jede Wulst des zweiten Paares von Wulsten gefaltet sind;
   e) ein Paar von Herunterschlagkarkassenlagen (20), welche sich zwischen den Wulstabschnitten erstrecken, wobei die Herunterschlagkarkassenlagen radial und axial innerhalb zumindest teilweise um alle der Hochschlagkarkassenlagen und Wüste gefaltet sind.

7. Diagonalreifen (10) gemäß Anspruch 6, worin die Nylonmonofilamente von etwa 4400 dtex (4000 denier) sind und eine Zähigkeit von etwa 70 cN/tex (8 g/denier) ein Initialmodul von etwa 440 cN/tex (50 g/denier) eine Bruchdehnung von zumindest 18% und eine Schrumpfung aufweisen, welche nicht größer als 4% ist, und worin die Nylonmonofilamente der Hochschlag- (17, 18) und Herunterschlag- (20)karkassenlagen ausgerichtet sind bei 28° bis 40° bezüglich einer Äquatorialebene des Reifens und worin die Nylonmonofilamente der Brecherlagen ausgerichtet sind bei 23° bis 35° bezüglich einer Äquatorialebene des Reifens.

8. Diagonalreifen (10) gemäß Anspruch 1 oder 3, worin das Monofilament leicht abgeflacht ist und einen im wesentlichen ovalen Schnitt aufweist.

9. Diagonalreifen (10) gemäß Anspruch 1 oder 3, worin das Monofilament eine Mittelverengung aufweist.

10. Diagonalreifen (10) gemäß Anspruch 1 oder 3, worin das Monofilament stark abgeflacht ist mit abgerundeten Kanten.

12

**Revendications**

1. Bandage pneumatique (10) à structure diagonale pour aéroplane, comprenant :

   (a) au moins une paire de talons essentiellement inextensibles espaces en direction axiale (12, 12a; 14, 14a),

   (b) des nappes de carcasse diagonales (16) entourant lesdits talons (12, 12a; 14, 14a),

   (c) des nappes de sommet (22) disposées en direction radiale à l'extérieur des nappes de carcasse dans la portion de couronne (24) dudit bandage pneumatique,

   dans lequel lesdites nappes de carcasse (16) et lesdites nappes de sommet (22) comprennent des câblés essentiellement parallèles, caractérisé

   - en ce que les câblés renforçant les nappes de carcasse sont des monofilaments en nylon (11) possédant une ténacité d'au moins 53 cN/tex (6 g/denier), un module initial d'au moins 309 cN/tex (35 g/denier) et un retrait qui n'est pas supérieur à 5%;

   - en ce que les monofilaments possèdent une section transversale oblongue, leur étendue linéaire maximale représentant deux à cinq fois leur étendue en coupe transversale qui lui est perpendiculaire; et

   - en ce que les monofilaments possèdent une densité linéaire d'au moins 4.400 dtex (4000 deniers) et une densité latérale de 315-630 EPM (8-16 EPI).

2. Bandage pneumatique diagonal (10) selon la revendication 1, dans lequel les monofilaments en nylon des nappes de carcasse (16) sont orientés en formant un angle de 28° à 40° par rapport au plan équatorial du bandage pneumatique.

3. Bandage pneumatique diagonal (10) selon la revendication 1, dans lequel les nappes de sommet (22) sont renforcées par des monofilaments en nylon possédant une ténacité d'au moins 53 cN/tex (6 g/denier), un module initial d'au moins 265 cN/tex (30 g/denier) et un retrait qui n'est pas supérieur à 5%, les monofilaments possédant une section transversale oblongue dont l'étendue linéaire maximale représente de 2 à 5 fois leur étendue en coupe transversale qui lui est perpendiculaire.

4. Bandage pneumatique diagonal (10) selon la revendication 3, dans lequel les monofilaments en nylon des nappes de sommet (22) sont orientés en formant un angle de 23° à 35° par rapport au plan équatorial du bandage pneumatique et possèdent une densité latérale de 236-630 EPM (6-16 EPI).

5. Bandage pneumatique diagonal (10) selon la revendication 1 ou 3, dans lequel lesdits monofilaments en nylon possèdent une valeur d'environ 4400 dtex (1.000 deniers) et possèdent une ténacité d'environ 80 cN/tex (9 g/denier), un module initial d'environ 440 cN/tex (50 g/denier), un allongement à la rupture d'au moins 18% et un retrait qui n'est pas supérieur à 4%.

6. Bandage pneumatique diagonal (10) selon la revendication 1, comprenant

   (a) une première paire de talons essentiellement inextensibles séparés en direction axiale (12, 12a), disposée dans une paire de portions de talons (15),

   (b) au moins une paire de nappes de carcasse (17) à retournement vers le haut s'étendant entre les talons de ladite première paire de talons (12, 12a), chacune desdites nappes de carcasse à retournement vers le haut étant repliée en direction axiale et en direction radiale vers l'extérieur autour de chaque talon de ladite première paire de talons;

   (c) une deuxième paire de talons essentiellement inextensibles séparés en direction axiale (14, 14a), un talon de ladite seconde paire étant disposé en direction axiale à l'extérieur de chaque talon de ladite première paire de talons (12, 12a) et les nappes de carcasse (17) à retournement vers le haut étant repliées autour d'eux;

   (d) au moins une paire de nappes de carcasse (18) à retournement vers le haut s'étendant entre les talons du second jeu de talons (14, 14a), lesdites nappes de carcasse à retournement vers le haut étant repliées en direction axiale et en direction radiale vers l'extérieur autour de chaque talon de ladite seconde paire de talons;

   (e) une paire de nappes de carcasse (20) à retournement vers le bas s'étendant entre lesdites portions de talons, lesdites nappes de carcasse à retournement vers le bas étant repliées en direction radiale et en direction axiale vers l'intérieur au moins partiellement autour de toutes lesdites nappes de carcasse à retournement vers le haut et autour de tous lesdits talons.

**7.** Bandage pneumatique diagonal (10) selon la revendication 6, dans lequel lesdits monofilaments en nylon possèdent une valeur d'environ 4.400 dtex (4.000 deniers) et possèdent une ténacité d'environ 70 cN/tex (8 g/denier), un module initial d'environ 440 cN/tex (50 g/denier), un allongement à la rupture d'au moins 18% et un retrait qui n'est pas supérieur à 4%, et dans lequel les monofilaments en nylon desdites nappes de carcasse (17, 18) à retournement vers le haut et (20) à retournement vers le bas sont orientés en formant un angle de 28° à 40° par rapport au plan équatorial du bandage pneumatique, et dans lequel les monofilaments en nylon desdites nappes de sommet sont orientés en formant un angle de 23° à 35° par rapport au plan équatorial du bandage pneumatique.

**8.** Bandage pneumatique diagonal (10) selon la revendication 1 ou 3, dans lequel le monofilament est légèrement aplati et possède une section essentiellement ovale.

**9.** Bandage pneumatique diagonal (10) selon la revendication 1 ou 3, dans lequel les monofilaments possèdent un rétrécissement central.

**10.** Bandage pneumatique diagonal (10) selon la revendication 1 ou 3, dans lequel les monofilaments sont fortement aplatis en présentant des bords arrondis.

FIG. I

FIG. 2

22

16

26

18

17

30

12a

14a

10

20

15

FIG. 3

FIG. 4

FIG. 5

# FIG. 2A

32

13

11

13

11